# EUROPÄISCHE PATENTSCHRIFT

(11) **EP 0 538 607 B1**
(45) Veröffentlichungstag und Bekanntmachung des Hinweises auf die Patenterteilung: **19.07.1995**
(21) Anmeldenummer: 92115242.7
(22) Anmeldetag: 05.09.1992
(51) Int. Cl.: B60R 21/20

(54) **Rückhaltevorrichtung für Kraftfahrzeuginsassen**
Vehicle occupant restraining apparatus
Dispositif de retenue pour occupant de véhicule

(30) Priorität: 19.10.1991 DE 4134673
(43) Veröffentlichungstag der Anmeldung: 28.04.1993
(73) Patentinhaber: Dr.Ing.h.c. F. Porsche Aktiengesellschaft, 70435 Stuttgart (DE)
(72) Erfinder: Boegge, Herbert, W-7135 Wiernsheim (DE); Schwan, Norbert, W-7250 Leonberg 6 (DE); Kneip, Rainer, W-7147 Eberdingen-Hochdorf (DE)

(56) Entgegenhaltungen:
- FR-A- 2 167 652
- US-A- 3 514 125
- US-A- 4 191 392
- US-A- 4 332 398

## Beschreibung

Die Erfindung bezieht sich auf eine Rückhaltevorrichtung für Kraftfahrzeuginsassen, die sich im wesentlichen aus einer Aufblaseinrichtung, einem Gehäuse und einem mit dem Gehäuse verbundenen, aufblasbaren Luftsack zusammensetzt.

Bei einer bekannten Anordnung der eingangs genannten Gattung (DE 39 39 311 A1) ist der Luftsack über ein ringförmiges Befestigungsteil gegen einen Gehäuseabschnitt geklemmt, wobei über den Umfang des Befestigungsteils verteilt mehrere Befestigungselementen vorgesehen sind.

Dieses Dokument bildet den Oberbegriff Anspruchs 1.

Der Anordnung haftet der Nachteil an, daß zur Befestigung des Luftsacks eine Vielzahl von Befestigungselementen erforderlich ist und daß die Montage des Luftsackes relativ zeit- und kostenaufwendig ist.

Dokument US-A-4 332 398 zeigt ein Beifahrer-Airbagmodul, worin der ganze Luftsack in einem Gehäuse untergebracht ist und um die Aufblaseinrichtung gewickelt ist und über deren Gesamtbreite gegenseitig zu der Aufblasseite an der Rückseite der Aufblaseinrichtung befestigt ist.

Aufgabe der Erfindung ist es, eine Luftsackbefestigung an einem Gehäuse derart auszubilden, daß bei funktionsgerechtem Halt die erforderlichen Bauteile, die Montagezeit und die Herstellungskosten reduziert werden.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch den am Luftsack ausgebildeten hosenträgerartigen Abschnitt eine einfache, kostengünstige Befestigung des Luftsackes am Gehäuse erzielt wird. Durch das formschlüssige Umgreifen der Seitenwände und des Bodens des Gehäuses wird ein sicherer Halt zwischen Luftsack und Gehäuse erreicht, wobei sich die auftretenden Kräfte über einen großen Gehäusebereich verteilen.

Zur Befestigung des Luftsackes am Gehäuse sind nur wenig Bauteile und keine Befestigungselemente wie Schrauben oder dergleichen erforderlich, wodurch die Montagezeit und die Kosten wesentlich verringert werden.

Lediglich benachbart der Ausströmöffnung ist eine Verbindung zwischen dem Gehäuse und dem Luftsack vorgesehen, wobei das verwendete Spannelement eine funktionsgerechte Abdichtung zwischen dem Gehäuse und dem Luftsack bewirkt.

Durch eine seitlich außenliegende Aussparung am hosenträgerartigen Abschnitt wird eine einfache Montage des Luftsackes erzielt (seitliches Aufschieben). Die oberhalb und unterhalb des Spannelements vorgesehenen, nach außen ragenden Elemente an Gehäuse und Luftsack verhindern ein Verschieben des Spannelementes in Höhenrichtung.

Ein Ausführungsbeispiel der Erfindung ist in der Zeichnung dargestellt und wird im folgenden näher erläutert. Es zeigt
- Fig. 1: ein Beifahrerairbagmodul, von vorne gesehen,
- Fig. 2: eine Ansicht in Pfeilrichtung R der Fig. 1,
- Fig. 3: ein Schnitt nach der Linie III-III der Fig. 2,
- Fig. 4: eine perspektivische Ansicht auf das Gehäuse, die Aufblasvorrichtung, den Luftsack und das Spannelement für den Luftsack.

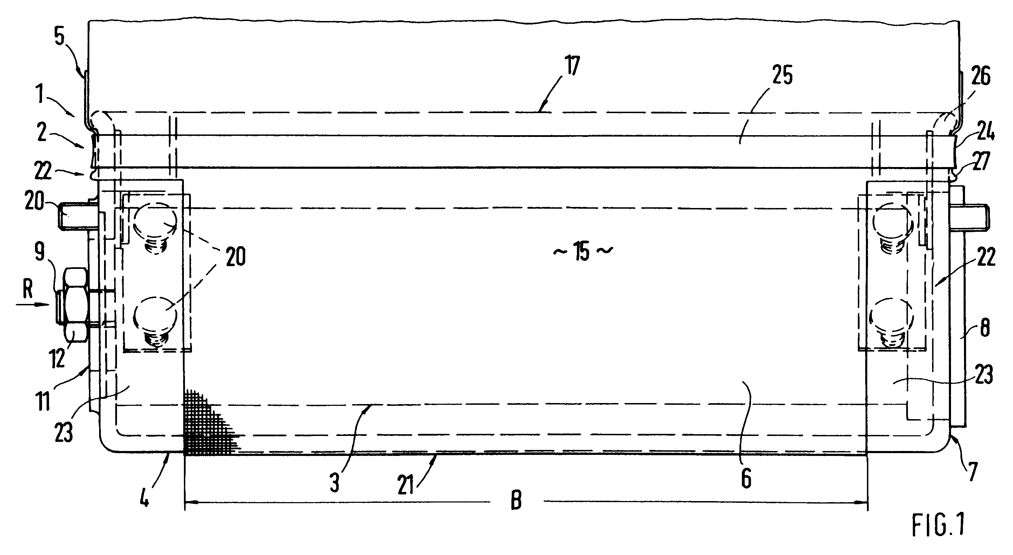

Eine Rückhaltevorrichtung 1 für einen Kraftfahrzeuginsassen umfasst gemäß Fig. 1 einen Beifahrerairbagmodul 2, welcher in eine nicht näher dargestellte Öffnung eines Armaturenbrettes eingesetzt und aufbauseitig in Lage gehalten ist. Die Öffnung wird durch einen nicht gezeigten Deckel verschlossen, der mit dem Beifahrerairbagmodul und/oder dem Armaturenbrett in geeigneter Weise verbunden ist.

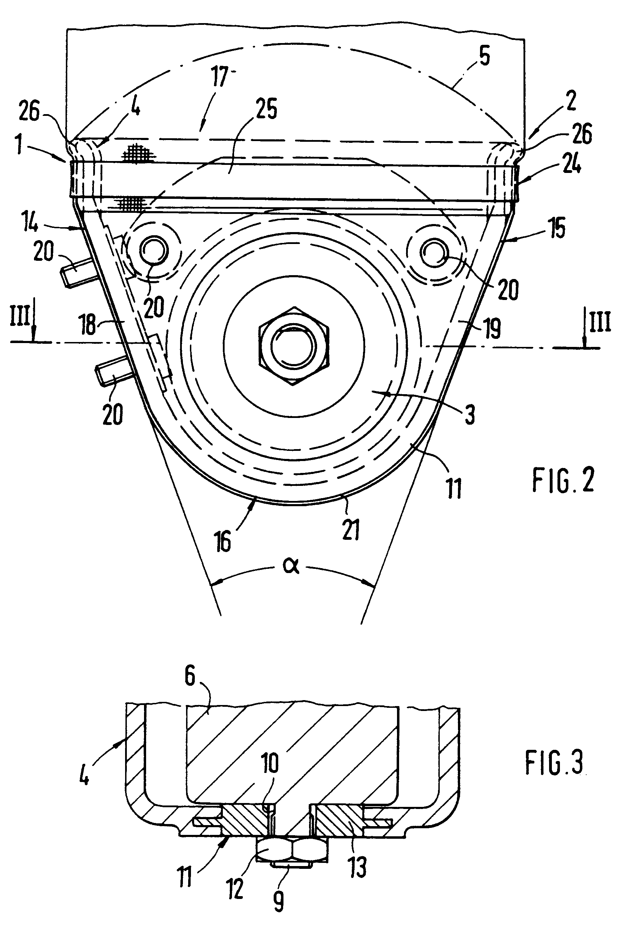

Das Beifahrerairbagmodul 2 setzt sich im wesentlichen aus einer Aufblaseinrichtung 3, einem Gehäuse 4 und einem mit dem Gehäuse 4 verbundenen aufblasbaren Luftsack 5 zusammen. Entsprechend den Fig. 2 und 3 wird die Aufblaseinrichtung 3 durch einen Röhrengenerator 6 gebildet, der beispielsweise von einer Stirnseite 7 des Gehäuses 4 her durch eine korrespondierende Öffnung in das Gehäuse 4 eingeschoben wird und sich mit einem Bund 8 an der Außenseite der Stirnwand 7 abstützt (siehe Fig. 1).

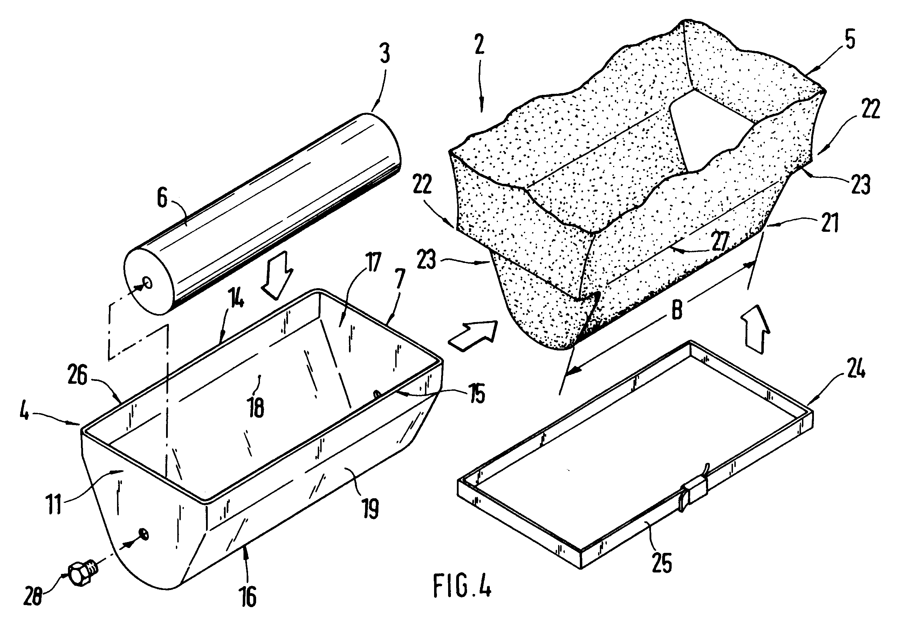

Das andere Ende des Röhrengenerators 6 weist einen vorstehenden Gewindezapfen 9 auf, der durch eine Gehäuseöffnung 10 der anderen Stirnwand 11 des Gehäuses 4 hindurchgeführt ist. Auf den das Gehäuse 4 überragenden Endbereich des Gewindezapfens 9 ist von außen eine Mutter 12 aufgedreht, durch die der Röhrengenerator 6 festgelegt ist (Fig. 3). Es besteht jedoch auch die Möglichkeit, die Aufblaseinrichtung 3 von oben her in das Gehäuse 4 einzusetzen (Fig. 4). Die Aufblaseinrichtung 3 ist durch Schrauben 28 mit dem Gehäuse 4 verbunden.

Gemäß Fig. 2 ist das trogförmige, nach oben hin offene Gehäuse 4 aus duroplastischem Kunststoff gefertigt, wobei im Bereich des Gewindezapfens 9 ein Einlegeteil 13 aus Metall oder Keramik innerhalb des Gehäuses 4 vorgesehen ist.

Das Gehäuse 4 kann jedoch auch aus Stahl- oder Alublech gefertigt oder als Alu-Druckgußteil ausgebildet sein.

Entsprechend Fig. 2 setzt sich das trogförmige Gehäuse 4 aus zwei gegenüberliegenden Seitenwänden 14, 15, einem gerundeten Boden 16 und zwei Stirnwänden 7, 11 zusammen, wobei dem Boden 16 gegenüberliegend die Ausströmöffnung 17 vorgesehen ist. Die Seitenwände 14, 15 sind benachbart der Ausströmöffnung 17 abschnittsweise parallel zueinander ausgerichtet und verlaufen anschließend schräg nach innen unter Bildung eines spitzen Winkels α (Fig. 2).

Die beiden schräg verlaufenden Abschnitte 18, 19 sind über den gerundeten Boden 16 miteinander verbunden.

Entweder an den beiden Stirnwänden 7, 11 oder an einer der schräg verlaufenden Abschnitte 18, 19 sind vorstehende Gewindebolzen 20 zur aufbauseitigen Befestigung des Gehäuses 4 angebracht. Die Gewindebolzen 20 werden in das Gehäusewerkzeug eingelegt, so daß sie in das Gehäuse 4 integriert sind.

Eine einfache und kostengünstige Montage und Fertigung der Luftsackbefestigung am Gehäuse 4 wird dadurch erzielt, daß sich der Luftsack 5 zumindest über einen hosenträgerartig ausgebildeten Abschnitt 21 an der Außenseite des Gehäuses 4 abstützt.

Der hosenträgerartige Abschnitt 21 erstreckt sich zumindest über einen Teilbereich (B) der Quererstreckung des Gehäuses 4. Eine vorteilhafte Kraftübertragung wird dann erreicht, wenn sich der hosenträgerartige Abschnitt 21 über einen wesentlichen Teil der Quererstreckung bzw. über die gesamte Quererstreckung des Gehäuses 4 erstreckt.

Der hosenträgerartige Abschnitt 21 ist um beide gegenüberliegende Seitenwände 14, 15 und den gerundeten Boden 16 des Gehäuses 4 herumgeführt und liegt formschlüssig an der Außenseite des Gehäuses 4 an. Gemäß Fig. 2 kann der hosenträgerartige Abschnitt 21 entweder einstückig mit dem Luftsack 5 ausgebildet sein oder aber er wird durch ein separates Teil gebildet, welches mit dem Luftsack 5 nachträglich fest verbunden ist.

Eine besonders einfache Montage des Luftsackes 5 ist dann gewährleistet, wenn zumindest ein seitlich außenliegender Bereich 22 des hosenträgerartigen Abschnitts 21 eine Aussparung 23 aufweist, da hierdurch ein seitliches Aufschieben des Luftsackes 5 über das Gehäuse 4 möglich ist.

In den Fig. 1 und 4 ist der hosenträgerartige Abschnitt 21 an seinen beiden Außenseiten 22 mit einer Aussparung 23 versehen. Jede Aussparung 23 umfasst einen wesentlichen Teil der Stirnseite 7 bzw. 11 sowie schmale umfangsseitige Streifen im Bereich der angeformten Gewindezapfen 20 zur Gehäusebefestigung.

Benachbart der Ausströmöffnung 17 ist eine Abdichtung zwischen dem Luftsack 5 und dem innenliegenden Gehäuse 4 vorgesehen, die durch ein umfangsseitiges Spannelement 24 gebildet wird.

Das Spannelement 24 wird durch ein zusammenziehbares, festlegbares Spannband 25 nach Art einer Schlauchschelle gebildet, welches gegen ein Verschieben in Höhenrichtung gesichert ist. Es besteht auch die Möglichkeit, das Spannelement 24 als Spannrahmen auszubilden, wobei der profilierte Spannrahmen eine zusätzliche Versteifungsfunktion für das Gehäuse 4 ausübt.

Gemäß Fig. 2 erstreckt sich das Spannband 25 im Bereich der parallel zueinander verlaufenden Abschnitte der beiden Seitenwände 14, 15. Zur Lagefixierung des Spannelements 24 in Höhenrichtung sind am Gehäuse 4 oberhalb des Spannelements 24 nach außen gerichtete Wülste 26 vorgesehen, wogegen unterhalb des Spannelementes 24 zumindest entlang der Seitenwände 14, 15 am Luftsack 5 nach außen gerichtete wulstartige Elemente 27 angeordnet sind.

Die wulstartigen Elemente 27 können als Einlegeteil, als Naht oder Querschnittsverdickung ausgeführt sein.

Der nicht näher dargestellte zusammengefaltete Abschnitt des aufblasbaren Luftsackes 5 erstreckt sich oberhalb der Ausströmöffnung 17 des Gehäuses 4 in Fortsetzung des hosenträgerartigen Abschnitts 21.

## Patentansprüche

1. Rückhaltevorrichtung für Kraftfahrzeuginsassen, die sich im wesentlichen aus einer Aufblaseinrichtung, einem Gehäuse und einem mit dem Gehäuse verbundenen aufblasbaren Luftsack zusammensetzt, **dadurch gekennzeichnet,** daß sich der Luftsack (5) über zumindest einen hosenträgerartig ausgebildeten Abschnitt (21) an der Außenseite des Gehäuses (4) abstützt.

2. Rückhaltevorrichtung nach Anspruch 1, **dadurch gekennzeichnet,** daß der hosenträgerartige Abschnitt (21) um gegenüberliegende Seitenwände (14, 15) und einen Boden (16) des Gehäuses (4) herumgeführt ist.

3. Rückhaltevorrichtung nach den Ansprüchen 1 und 2, **dadurch gekennzeichnet,** daß der hosenträgerartige Abschnitt (21) einstückig mit dem Luftsack (5) ausgebildet ist.

4. Rückhaltevorrichtung nach einem oder mehreren der vorangegangenen Ansprüche, **dadurch gekennzeichnet,** daß sich der hosenträgerartige Abschnitt (21) zumindest über einen Teilbereich (B) der Breite des Gehäuses (4) erstreckt.

5. Rückhaltevorrichtung nach Anspruch 1, **dadurch gekennzeichnet,** daß der hosenträgerartige Abschnitt (21) von der Seite her über das Gehäuse (4) aufgeschoben ist.

6. Rückhaltevorrichtung nach Anspruch 1, **dadurch gekennzeichnet,** daß der Luftsack (5) an zumindest einem seitlich außenliegenden Endbereich (22) des hosenträgerartigen Abschnitts (21) eine die seitliche Montage ermöglichende Aussparung (23) aufweist.

7. Rückhaltevorrichtung nach Anspruch 1, **dadurch gekennzeichnet,** daß der Luftsack (5) in einem obenliegenden Bereich des hosenträgerartigen Abschnitts (21) über ein Spannelement (24) gasdicht mit dem Gehäuse (4) verbunden ist.

8. Rückhaltevorrichtung nach Anspruch 7, **dadurch gekennzeichnet,** daß das Spannelement (24) durch ein zusammenziehbares festlegbares Spannband (25) gebildet wird, das das Gehäuse (4) ringartig umgibt.

9. Rückhaltevorrichtung nach den Ansprüchen 7 und 8, **dadurch gekennzeichnet,** daß das zur Lagefixierung des Spannelements (24) am darüberliegenden Randbereich des Gehäuses (4) und zumindest örtlich am darunterliegenden Bereich des Luftsackes (5) nach außen gerichtete wulstartige Elemente (26, 27) vorgesehen sind.

## Claims

1. A restraining device for motor-vehicle passengers, essentially comprising an inflating device, a housing and an inflatable air bag connected to the housing, **characterized in that** the air bag (5) is supported on the outside of the housing (4) by way of at least one portion (21) constructed in the manner of trouser braces.

2. A restraining device according to Claim 1, **characterized in that** the braces-like portion (21) passes around opposite side walls (14, 15) and a base (16) of the housing (4).

3. A restraining device according to Claims 1 and 2, **characterized in that** the braces-like portion (21) is constructed integrally with the air bag (5).

4. A restraining device according to one or more of the preceding Claims, **characterized in that** the braces-like portion (21) extends over at least a partial area (**B**) of the width of the housing (4).

5. A restraining device according to Claim 1, **characterized in that** the braces-like portion (21) is pushed over the housing (4) from the side.

6. A restraining device according to Claim 1, **characterized in that**, on at least one end area (22) of the braces-like portion (21) situated laterally on the outside, the air bag (5) comprises a recess (23) which permits lateral assembly.

7. A restraining device according to Claim 1, **characterized in that**, in an upper area of the braces-like portion (21), the air bag (5) is connected in a gas-tight manner to the housing (4) by way of a clamping member (24).

8. A restraining device according to Claim 7, **characterized in that** the clamping member (24) is formed by a clamping band (25) capable of being tightened and fastened and surrounding the housing (4) in an annular manner.

9. A restraining device according to Claims 7 and 8, **characterized in that** outwardly orientated toroid members (26, 27) are provided in order to fix the position of the clamping member (24) on the edge area of the housing (4) situated thereabove and at least locally on the area of the air bag (5) situated thereunder.

## Revendications

1. Dispositif de retenue pour passagers d'un véhicule, qui se compose essentiellement d'un dispositif gonflable, d'un boîtier et d'un sac à air gonflable, relié au boîtier, caractérisé en ce que le sac à air (5) est soutenu par au moins une portion (21), réalisée à la manière de bretelles, sur le côté extérieur du boîtier (4).

2. Dispositif de retenue selon la revendication 1, caractérisé en ce que la portion (21) en forme de bretelles passe autour de parois latérales (14, 15) se faisant face et d'un fond (16) du boîtier (4).

3. Dispositif de retenue selon les revendications 1 et 2, caractérisé en ce que la portion (21) en forme de bretelles est réalisée d'une seule pièce avec le sac à air (5).

4. Dispositif de retenue selon une ou plusieurs des revendications précédentes, caractérisé en ce que la portion (21) en forme de bretelles s'étend au moins sur une partie (B) de la largeur du boîtier (4).

5. Dispositif de retenue selon la revendication 1, caractérisé en ce que la portion (21) en forme de bretelles est enfilée à partir du côté sur le boîtier (4).

6. Dispositif de retenue selon la revendication 1, caractérisé en ce que le sac à air (5) présente, sur au moin une zone d'extrémité (22) latéralement extérieure de la portion (21) en forme de bretelles, une découpe (23) permettant le montage latéral.

7. Dispositif de retenue selon la revendication 1, caractérisé en ce que le sac à air (5) est relié de manière étanche aux gaz avec le boîtier (4), par un élément de serrage (24), dans une zone située à la partie supérieure de la portion (21) en forme de bretelles.

8. Dispositif de retenue selon la revendication 7, caractérisé en ce que l'élément de serrage (24) est formé par une sangle de tension (25) pouvant être serrée et fixée, qui entoure en anneau le boîtier (4).

9. Dispositif de retenue selon les revendications 7 et 8, caractérisé en ce que des éléments (26, 27) en forme de bourrelet, dirigés vers l'extérieur, sont prévus pour fixer la position de l'élément de serrage (24) sur la zone de bordure située au-dessus du boîtier (4) et au moins localement sur la zone située au-dessous du sac à air (5).
